# EUROPÄISCHE PATENTSCHRIFT

(11) **EP 2 641 045 B1**
(45) Veröffentlichungstag und Bekanntmachung des Hinweises auf die Patenterteilung: **15.10.2014**
(21) Anmeldenummer: 12705816.2
(22) Anmeldetag: 08.02.2012
(51) Int. Cl.: F27B 3/20, C21C 5/46, C21C 5/52

(54) **BRENNEREINSATZ FÜR EINEN LICHTBOGENOFEN**
BURNER INSERT FOR AN ARC FURNACE
CHARGE DE BRÛLEUR POUR FOUR À ARC

(30) Priorität: 23.02.2011 DE 102011004586
(43) Veröffentlichungstag der Anmeldung: 25.09.2013
(73) Patentinhaber: Siemens Aktiengesellschaft, 80333 München (DE)
(72) Erfinder: DORNDORF, Markus, 76534 Baden-Baden (DE); HENRICH, Michael, 77731 Willstätt (DE)
(86) Internationale Anmeldenummer: PCT/EP2012/052116
(87) Internationale Veröffentlichungsnummer: WO 2012/113647

(56) Entgegenhaltungen:
- DE-A1- 19 637 246

## Beschreibung

Die Erfindung betrifft einen Brennereinsatz für einen Lichtbogenofen.

In manchen Stahlwerken wird im Rahmen eines Recyclingverfahrens Metallschrott in einem Elektrolichtofenbogen geschmolzen und wieder zu Stahl verarbeitet. In einem derartigen Lichtbogenofen erzeugen drei Elektroden, welche mit Drehstrom versorgt werden, einen Lichtbogen von etwa 8000°C Hitze zum Schmelzen des Stahlschrotts. Zusätzlich werden Brenner, z.B. Erdgas-Sauerstoff-Brenner in Kombination mit Sauerstoff-Überschall-Injektoren, zur Einbringung fossiler Energie in den Lichtbogenofen eingesetzt. Die entsprechenden Brenner dienen sowohl zur Unterstützung des Lichtbogens im Hinblick auf die Energieeinbringung als auch zur Vergleichmäßigung der eingebrachten Wärme. Ein entsprechender Elektrolichtbogenofen besitzt einen Durchmesser von ca. 6 - 8 m. Die Brenner sind hierbei um den Umfang des in der Regel etwa kreisrunden Lichtbogenofens verteilt.

Ein derartiger Lichtbogenofen besitzt an der Unterseite ein feuerfestes schmelzmetallurgisches Gefäß als Untergefäß. Auf dieses ist ein etwa ringförmiges Obergefäß aufgesetzt, welches aus 8 - 10 ringförmig angeordneten Paneelen besteht, welche beispielsweise Maße von etwa 1,80 m Höhe und 1,20 m Breite aufweisen. Diese Paneele tragen Kupferrohre, welche von Kühlwasser durchströmt sind. In den Seitenwänden bzw. mehreren oder allen Wandpaneelen sind Wandöffnungen, z.B. in der Größe 80 cm x 40 cm, eingelassen. In diesen Wandöffnungen sind bei bekannten Lichtbogenöfen nasenförmig in den Innenraum des Ofens ragende Nasenpaneele eingebracht. Diese wiederum enthalten die o.g. fossilen Brenner. Mit anderen Worten sind die Brenner in nasenförmig in den Innenraum vorragenden Vorsprüngen gehalten, so dass die Brenner bzw. deren Flamm-Auslassöffnungen von der Innenwand des Obergefäßes radial nach innen versetzt sind. So wird die Reichweite der Brennerflamme zum zu schmelzenden Stahlschrott hin verbessert. Andererseits wird so das Feuerfestmaterial im Lichtbogenofen, welches insbesondere das Untergefäß auskleidet, vor der Brennerflamme bzw. deren Hitzeeinwirkung geschont. Ein direktes Aufstrahlen einer Flamme auf das Feuerfestmaterial würde dieses wesentlich schneller zerstören.

Die genannten Brenner- bzw. Nasenpaneele sind besonders durch das Einbringen von Stahlschrott aus Schrottkörben gefährdet. Der Schrott wird hierbei von oben in den Innenraum des Ofens eingeworfen. Durch die Fallhöhe und das Eigengewicht des Stahlschrotts werden bei Auftreffen von Schrott unter anderem hohe mechanische Kräfte auf die Oberseite der Brennerpaneele ausgeübt, welche dann oft durch auftreffende Stahlteile irreparabel beschädigt werden. Da außerdem die Brennerpaneele fest in den Wandpaneelen installiert sind, sind Ausrichtung und Winkel sowie Position der Brennerflamme bezüglich des Untergefäßes festgelegt, d.h. unveränderlich. Dadurch sind auch Winkel und Reichweite der Brennerflamme und des Überschallsauerstoffstrahls unveränderlich. Da der Stahlschrott und seine Verteilung im Ofengefäß jedoch von Charge zu Charge veränderlich sind, ist eine hohe Effizienz der ortsfest, d.h. unveränderlich installierten Brenner nicht immer gegeben.

Zur Lösung des Beschädigungsproblems ist z.B. ein modular aufgebauter Brennereinsatz der Fa. Siemens als Produkt Sime-tall^{CIS} RCB bekannt. Hier sind insbesondere die nasenförmig in den Innenraum des Ofens ragenden ober- und unterseitigen Abdeckungen des Brennereinsatzes als massive Kupferplatten modular austauschbar, falls diese beschädigt werden. Dies reduziert die Stillstandszeiten eines Ofens bei Wartungsintervallen und die Materialkosten, da nicht das gesamte Brennerpaneel ausgetauscht werden muss.

Aber auch bei schwenkbar gelagerten Brennereinsätzen, wie z.B. in der Offenlegungsschrift DE 196 37 246 A1 beschrieben, besteht weiterhin die Gefahr, dass noch in den Ofenraum hineinragende Lanzen oder Brenner oder die Unterseite des Brennereinsatzes beschädigt werden können

Aufgabe der vorliegenden Erfindung ist es, einen verbesserten Brennereinsatz für einen Lichtbogenofen anzugeben.

Die Aufgabe wird gelöst durch einen Brennereinsatz gemäß Patentanspruch 1. Der Brennereinsatz weist einen Tragrahmen auf, welcher in eine Wandöffnung einer Seitenwand eines Lichtbogenofens einsetzbar ist. Im Tragrahmen ist ein Brenner angeordnet. Erfindungsgemäß ist der Tragrahmen im Montagezustand des Brennereinsatzes, d.h. wenn dieser in die Wandöffnung des Lichtbogenofens eingesetzt ist, relativ zur Seitenwand um eine Schwenkachse zwischen einer Parkposition und einer Arbeitsposition schwenkbar gelagert. Die Parkposition ist dadurch gekennzeichnet, dass sich Tragrahmen und Brenner auβerhalb eines Innenraums des Lichtbogenofens befindet. In der Arbeitsposition dagegen befinden sich Tragrahmen und Brenner zumindest teilweise innerhalb des Innenraums.

In der Parkposition schließt z.B. der Brennereinsatz bzw. dessen dem Ofen zugewandte Stirnfläche bündig mit der Seitenwand ab. Durch die Erfindung ist es daher möglich, bei der Beladung des Lichtbogenofens mit Stahlschrott - auch Chargierung genannt - den Brennereinsatz in die Parkposition zu verschwenken und diesen somit aus dem Innenraum des Lichtbogenofens zu entfernen. Herabfallender Stahlschrott kann so den Brennereinsatz nicht von oben her treffen und damit auch nicht oder nur weniger stark - d.h. vergleichbar mit der Beschädigung sonstiger Wandpaneele bzw. Seitenwände des Obergefäßes - beschädigen.

Da der Brenner in der Regel fest im Tragrahmen installiert ist, ist durch die Verschwenkung des Tragrahmens auch der Brenner verschwenkbar. Zum Beginn des Schmelzvorgangs bzw. zur Benutzung des Brenners wird daher - nach der Beladung des Ofens - der Brennereinsatz in die Arbeitsposition verschwenkt, wodurch auch der Brenner in den Innenraum des Lichtbogenofens verbracht wird. Auch die Austrittsöffnung für die Brennerflamme wird damit i.d.R. zum Innenraum hin verschwenkt, so dass die Brennerflamme besonders gut wirken kann.

Da mit dem Tragrahmen auch der Brenner verschwenkbar ist, kann insbesondere dessen Brennstrahlausrichtung variiert werden, wenn auch Zwischenstellungen der Schwenkbewegung zwischen Arbeits- und Parkposition eingenommen werden können. So kann der Winkel des Tragrahmens bzw. der Winkel des Brennerstrahls durch entsprechende Schwenkung um die Schwenkachse an die jeweiligen Erfordernisse bei einem Schmelzvorgang angepasst werden. Der Nutzen des Brenners kann somit optimiert werden.

Mit anderen Worten werden die oben beschriebenen Probleme gelöst bzw. der Brennereinsatz dadurch optimiert, dass dieser schwenkbar gelagert ist. Die Verstellung bzw. Verschwenkung erfolgt z.B. mittels eines Hydraulikzylinders oder eines anderen Antriebssystems, z.B. eines Ketten- oder Zahnradantriebs.

Zumindest kurz vor dem Chargieren kann - falls erwünscht - der Tragrahmen bzw. der gesamte Brennereinsatz aus dem Ofen herausgeklappt werden, so dass herunterfallender Schrott den Brennereinsatz - zumindest nicht von oben - treffen und nicht beschädigen kann. Anschließend wird, z.B. basierend auf einer Analyse, durch ein Messsystem das Brennerpaneel automatisch mittels Hydraulikzylinder um die Schwenkachse in den Ofen geklappt. Ein Messsystem ermöglicht hierbei Erkenntnisse über das Verhalten und die Position des Schrotts im Ofen, um durch die Nachführung die Effizienz der Brenner bzw. der Brennerflamme zu verbessern.

Durch die Erfindung ergibt sich eine mechanische Schutzvorrichtung des Brennerpaneels beim Chargieren. Diese wird dadurch realisiert, dass der Brennereinsatz in der Parkposition in Sicherheit vor beschädigendem Schrott gebracht wird. Hierdurch wird die Standzeit des Brennerpaneels verlängert und die Betriebssicherheit erhöht sich. Durch die schwenkbare Lagerung und insbesondere automatische Nachführung des Schwenkwinkels eines Brennerpaneels ist auch eine automatische Nachführung der Brennerflamme und damit eine Anpassung an den Prozessfortschritt bzw. den aktuellen Zustand des Schrotts im Ofen möglich. Hierdurch ist eine Effizienzsteigerung des Brenneinsatzes möglich.

In einer bevorzugten Ausführungsform ist der Tragrahmen zusätzlich um die Schwenkachse in eine Wartungsposition schwenkbar. In der Wartungsposition befinden sich Brenner und Tragrahmen in einem Außenraum des Lichtbogenofens und sind insbesondere von diesem aus zugänglich. Zum Beispiel wird von der Arbeitsposition aus der Tragrahmen dann über die Parkposition hinaus weiter nach außen, z.B. gänzlich aus dem Ofen bzw. der Seitenwand heraus geschwenkt, bis der Tragrahmen oder ein Teil dessen die Wandöffnung verlassen hat. Insbesondere ist so der Brenner z.B. zu Wartungszwecken zugänglich.

So wird zusätzlich die Möglichkeit geschaffen, das Brennerpaneel in eine Position außerhalb des Ofens zu verschwenken, um Wartungs- und Reparaturarbeiten einfach und sicher durchführen zu können. Ein Ausbau des Wandpaneels bzw. des vormals fest montierten Brennereinsatzes entfällt, da die Schwenkbewegung im Gegensatz hierzu einfach ausführbar ist. Durch das vollständige Herausklappen des Brennereinsatzes wird ein sehr guter Zugang für Wartungs- und Reparaturarbeiten realisiert bzw. der Zugang verbessert und vereinfacht.

In einer bevorzugten Ausführungsform der Erfindung durchsetzt der Tragrahmen die Wandöffnung derart, dass er diese zumindest sowohl in der Arbeits- als auch in der Parkposition nahezu vollständig ausfüllt. Mit anderen Worten füllt der Brennereinsatz die Wandöffnung nahezu vollflächig und spaltfrei aus. Dadurch kann, insbesondere auch beim Chargieren, kein Schrott oder Gas aus dem Ofen austreten. In der Arbeitsposition können dann ebenfalls weder Hitze, Gas noch Schrotteile oder flüssiges Metall austreten. Insbesondere ist der Tragrahmen derart gestaltet, dass er auch in jeder Zwischenposition zwischen Arbeits- und Parkposition ebenfalls die Wandöffnung vollständig spaltfrei ausfüllt.

In einer bevorzugten Variante dieser Ausführungsform wird letzteres besonders einfach dadurch erreicht, dass der Tragrahmen bezüglich der Schwenkachse eine im Wesentlichen kreissegmentförmig gestaltete Außenfläche aufweist. Diese Außenfläche weist er zumindest in dem Bereich auf, der bei einer Bewegung des Brennereinsatzes zwischen der Arbeits- und Parkposition von der Wandöffnung überstrichen wird. Mit anderen Worten hat der Brennereinsatz bzw. der Tragrahmen dann beispielsweise eine Außenform, die der eines Winkelsegmentes eines ebenen geraden Kreiszylinders entspricht, wobei die Schwenkachse die Mittellängsachse des Kreiszylinders darstellt. Umgangssprachlich formuliert ähnelt dann die Form z.B. der eines klassischen Tortenstücks.

In einer bevorzugten Ausführungsform ist der Brenner beabstandet zur Schwenkachse angeordnet. Hierdurch wird erreicht, dass insbesondere die Austrittsöffnung des Brenners für die Brennerflamme bezüglich ihres Abstandes zur Seitenwand und ihres Neigungswinkels zum Untergefäß veränderbar ist. Die Flammachse ist also ebenfalls um die Schwenkachse schwenkbar. So wird eine besonders flexible Einsatzmöglichkeit der Brennerflamme gewährleistet.

In einer weiteren bevorzugten Ausführungsform der Erfindung verläuft im Montagezustand des Brennereinsatzes im Lichtbogenofen die Schwenkachse waagrecht unterhalb des Brenners und bildet gleichzeitig das untere Ende des Tragrahmens bzw. Brennereinsatzes.

Die in der Parkposition zum Innenraum des Ofens weisende Seite des Brennereinsatzes bildet dann z.B. einen bündig mit der restlichen Innenwand abschließenden Abschnitt der Innenwand des Lichtbogenofens. Diese Seite ist dann z.B. besonders robust und mechanisch stabil ausgeführt. Diese weist z.B. eine Austrittsöffnung für die Brennerflamme auf. Durch Schwenken in den Innenraum wird diese Seite des Brennereinsatzes dann zum Untergefäß hin geneigt und bildet auch dort guten Schutz gegen hochspritzende Stahlschmelze.

Die restlichen Seiten des Brennereinsatzes können bedeutend weniger robust und stabil ausgeführt sein, da diese insbesondere in der Parkposition sich dann außerhalb des Lichtbogenofens und nicht im Gefahrbereich einer Beschädigung bei der Chargierung befinden.

In einer bevorzugten Ausführungsform kann durch Variierung des Schwenkwinkels zumindest zwischen der Park- und der Arbeitsposition, also durch Anfahren von Zwischenpositionen der Brennereinsatz dem Schmelzprozess bzw. dem Schrottverhalten angepasst bzw. nachgeführt werden. Dies kann auch automatisch durch Messung der Schrottmenge, Schrottart usw. gesteuert erfolgen.

Für eine weitere Beschreibung der Erfindung wird auf die Ausführungsbeispiele der Zeichnungen verwiesen. Es zeigen, jeweils in einer schematischen Prinzipskizze:
- FIG 1: einen Ausschnitt eines Lichtbogenofens mit Brennereinsatz in Parkposition,
- FIG 2: den Brennereinsatz aus FIG 1 in Arbeitsposition,
- FIG 3: den Brennereinsatz aus FIG 1 in Wartungsposition.

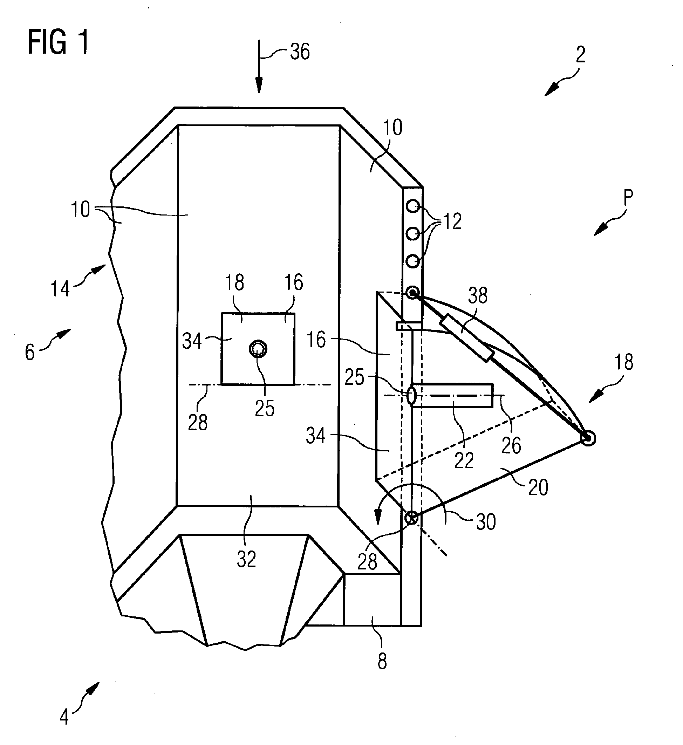

FIG 1 zeigt einen Lichtbogenofen 2, bestehend aus einem nur jeweils angedeuteten Untergefäß 4 und einem Obergefäß 6. Das Untergefäß 4 besteht aus Feuerfestmaterial oder ist zumindest an der Innenseite mit diesem ausgekleidet und bildet eine Schmelzwanne 8 zur Aufnahme von nicht dargestelltem Stahlschrott, der dort zu flüssigem Strahl umgeschmolzen werden soll.

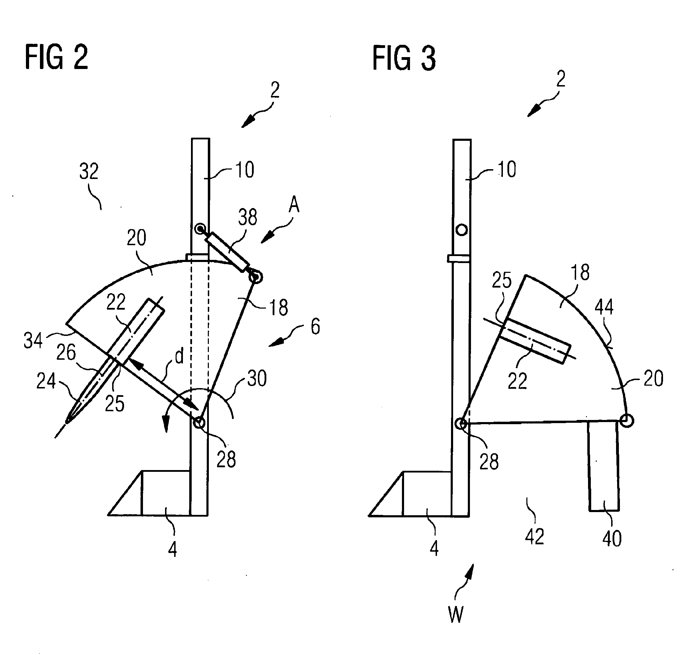

Das Obergefäß 6 weist eine Reihe von Wandpaneelen 10 auf, in deren Innerem Kühlleitungen 12 verlaufen. Die Wandpaneele 10 bilden zusammen das Obergefäß 6 bzw. eine Seitenwand 14 des Lichtbogenofens 2. Wenigstens einige der Wandpaneele 10 weisen Wandöffnungen 16 auf, in welche jeweilige Brennereinsätze 18 eingesetzt sind. Die Brennereinsätze 18 umfassen jeweils einen Tragrahmen 20 sowie einen Brenner 22, welcher im Betrieb (s. FIG 2) eine Brennerflamme 24 entlang einer Flammenrichtung 26 erzeugt, in FIG 1 angedeutet durch eine gestrichelte Linie, da der Brenner 22 derzeit nicht aktiv ist.

Erfindungsgemäß weist der Brennereinsatz 18 eine Schwenkachse 28 auf, um welche dieser schwenkbar ist. Der Tragrahmen 20 ist über einen Hydraulikzylinder 38 mit dem Wandpaneel 10 verbunden. Der Hydraulikzylinder 38 und eine diesen ansteuernde, nicht dargestellt Steuerung steuern die Bewegung des Brennereinsatzes 18 in oder entgegen der Richtung des Pfeils 30 um die Schwenkachse 28. In einer alternativen, nicht dargestellten Ausführungsform ist der Hydraulikzylinder 38 durch einen Ketten- oder Zahnradantrieb o.ä. ersetzt.

Gezeigt ist in FIG 1 eine Situation, in welcher sich der Brennereinsatz 18 bzw. Tragrahmen 20 in einer Parkposition P befindet. Eine dem Innenraum 32 des Lichtbogenofens 2 zugewandte Frontplatte 34 des Tragrahmens 20 schließt daher bündig mit der Innenseite der Seitenwand 14 ab. Wenn nun bei der Beladung, also Chargierung des Lichtbogenofens 2 in Richtung des Pfeils 36 nicht dargestellter Strahlschrott in diesen eingebracht wird, kann der Schrott im Herabfallen den Brennereinsatz 18 nicht beschädigen. Hierzu ist die Frontplatte 34 besonders massiv bzw. robust ausgeführt. Beim Beladen des Lichtbogenofens 2 sind die Brenner 22 nicht aktiv bzw. werden lediglich mit einer sogenannten Freihalteflamme betrieben.

FIG 2 zeigt den Lichtbogenofen 2 zu einem späteren Zeitpunkt während des Schmelzbetriebes. Der Brenner 22 ist aktiv, die Brennerflamme 24 ist eingeschaltet. Gegenüber der Parkposition P aus FIG 1 ist der gesamte Brennereinsatz 18, also der Tragrahmen 20 mit dem daran befestigten Brenner 22, in Richtung des Pfeils 30 um etwa 50° um die Schwenkachse 28 verschwenkt. Die Flammrichtung 26 ist daher nun ebenfalls in Richtung auf das Untergefäß 4 hin ausgerichtet, so dass die Brennerflamme 24 in Richtung des dort befindlichen, nicht dargestellten Stahlschrotts ausgerichtet ist, um diesen optimal abzuschmelzen.

FIG 2 zeigt damit eine Arbeitsposition A des Brennereinsatzes 18. Im Gegensatz zur Parkposition P aus FIG 1, bei welcher sich Tragrahmen 20 und Brenner 22 außerhalb des Innenraumes 32 des Lichtbogenofens 2 befinden, liegen diese nun zumindest teilweise im Innenraum 32. Der Tragrahmen 20 weist bezüglich der Schwenkachse 28 eine Kreissegmentform - etwa nach Art eines Tortenstücks - auf. Sowohl in der Parkposition P als auch in der Arbeitsposition A als auch in Zwischenstellungen füllt der Tragrahmen 20 die Wandöffnung 16 stets nahezu vollständig bzw. spaltfrei aus.

Der Brenner 22 kann zusammen mit dem Tragrahmen 20 auch beliebige Zwischenstellungen zwischen der Arbeitsposition A und der Parkposition P einnehmen. In der gezeigten Ausführungsform ist der Brenner 22 mit einem Abstand d zur Schwenkachse 28 beabstandet. Beim schwenken des Brennereinsatzes 18 führt daher der gesamte Brenner 22 eine Bewegung durch, weshalb auch die Austrittsöffnung 25 des Brenners 22, aus welcher die Brennerflamme 24 entweicht, ihren Abstand zum Wandpaneel 10 verändert. So kann die Flammrichtung 26 zwischen der waagerechten Lage aus FIG 1 und der geneigten Lage aus FIG 2 beliebig ausgerichtet werden. So ist die Brennerflamme 24 z.B. stets optimal auf den zu schmelzenden Stahlschrott ausgerichtet, der zumindest zu Beginn des Schmelzprozesses vom Untergefäß 4 auch in das Obergefäß 6 hineinragt und sich im Laufe des Schmelzens gänzlich in das Untergefäß 4 absetzt. Während der Einschmelzphase des Stahlschrotts wird daher der Brennereinsatz 18 zwischen der Parkposition P und der Arbeitsposition A in der Regel zeitweise auf Zwischenpositionen belassen. Erst in der sogenannten Flachbad- bzw. Refining-Phase wird z.B. für einen Jetbetrieb von nicht dargestellten Sauerstoffinjektoren im Brenner 22 zur Schaumschlackenbildung die Arbeitsposition A endgültig angefahren, um einen maximalen Effekt bzw. eine maximale Reichweite der Sauerstoff- bzw. Brennerflamme 24 zur Stahlschmelze hin zu erzielen. Die entsprechende Nachführung bzw. Wahl der Position A und P oder von Zwischenpositionen geschieht in der Regel automatisch durch eine nicht dargestellte Steuerung.

Die Frontplatte 34 ist in der Arbeitsposition A und den o.g. Zwischenpositionen zum Stahlschrott bzw. geschmolzenen Metall im Untergefäß 4 hin ausgerichtet und schützt so den Brenner 22 z.B. vor hochspritzendem Metall. Durch den in FIG 2 dargestellten Abstand der Austrittsöffnung 25 des Brenners 22 zum Wandpaneel 10 wird insbesondere das Feuerfestmaterial des Untergefäßes 4 geschont, da die Flammrichtung 26 an diesem vorbeiführt.

FIG 3 schließlich zeigt den Lichtbogenofen 2 während einem Wartungsstillstand, d.h. bei abgeschaltetem Brenner 22. Hier ist der Brennereinsatz 18 ausgehend von der Arbeitsposition A über die Parkposition P weiter entgegen der Richtung des Pfeils 30 in eine Wartungsposition W verschwenkt. In FIG 3 ist der Hydraulikzylinder 38 zu Wartungszwecken entfernt bzw. abgekoppelt. Der Tragrahmen 20 ist daher auf einer Paneelstütze 40 abgesetzt. Der gesamte Brennereinsatz 18, insbesondere auch der Brenner 22 selbst und insbesondere dessen Austrittsöffnung 25, liegen nun vollständig in einem Außenraum 42 des Lichtbogenofens 2. So kann der Brennereinsatz 18 bzw. dessen Bestandteile gewartet, gereinigt oder ausgetauscht werden. Dies gilt insbesondere, wenn der Brennereinsatz 18 modular ausgebaut ist, so dass z.B. die Frontplatte 34 einfach ausgetauscht werden kann.

Die Paneelstütze 40 kann auch entfernt werden, so dass der Brennereinsatz 18 noch weiter entgegen Richtung des Pfeils 30 verschwenkt bzw. abgesenkt werden kann, um diesen - z.B. für Schweißarbeiten im Bereich der Austrittsöffnung 25 - noch besser zugänglich zu machen.

Alternativ kann auch der gesamte Brennereinsatz 18 an der Schwenkachse 28 gelöst und entfernt werden. So kann dieser z.B. gegen einen neuen Brennereinsatz 18 getauscht werden.

In FIG 3 ist nochmals besonders deutlich die kreissegmentförmige Ausgestaltung des Tragrahmens 20 bzw. von dessen Außenfläche 44 in Bezug auf die Schwenkachse 28 erkennbar. In FIG 1 ist hierzu besonders deutlich erkennbar, dass im in den Figuren gezeigten Montagezustand des Brennereinsatzes 18 im Wandpaneel 10 die Schwenkachse 28 waagerecht unterhalb des Brenners 22 verläuft. Insbesondere verläuft diese am unteren Rand der Wandöffnung 16 und damit am unteren Rand des gesamten Brennereinsatzes 18. So kann der Brennereinsatz 18 bei der gezeigten Außenform nach Art eines Tortenstücks in allen Drehstellungen, in denen er die Wandöffnung 16 durchsetzt, diese stets gänzlich ausfüllen.

## Patentansprüche

1. Brennereinsatz (18) für einen Lichtbogenofen (2), mit einem in eine Wandöffnung (16) einer Seitenwand (14) des Lichtbogenofens (2) einsetzbaren Tragrahmen (20), und einem im Tragrahmen (20) angeordneten Brenner (22), bei dem der Tragrahmen (20) im Montagezustand des Brennereinsatzes (18) um eine Schwenkachse (28) relativ zur Seitenwand (14) zwischen einer Parkposition (P) und einer Arbeitsposition (A) schwenkbar gelagert ist, **dadurch gekennzeichnet dass** sich Tragrahmen (20) und Brenner (22) in der Parkposition (P) außerhalb und in der Arbeitsposition (A) zumindest teilweise innerhalb eines Innenraums (32) des Lichtbogenofens (2) befinden.

2. Brennereinsatz (18) nach Anspruch 1,
bei dem der Tragrahmen (20) zusätzlich um eine Schwenkachse (28) in eine Wartungsposition (W) schwenkbar ist, in der Brenner (22) und der Tragrahmen (20) sich in einem Außenraum (42) des Lichtbogenofens (2) befinden, und von diesem aus zugänglich sind.

3. Brennereinsatz (18) nach einem der vorhergehenden Ansprüche,
bei dem der Tragrahmen (20) die Wandöffnung (16) derart durchsetzt, dass er diese sowohl in der Arbeits- (A) als auch in der Parkposition (P) nahezu vollständig ausfüllt.

4. Brennereinsatz (18) nach Anspruch 3,
bei dem der Tragrahmen (20) bezüglich der Schwenkachse (28) eine im Wesentlichen kreissegmentförmig gestaltete Außenfläche (44) aufweist.

5. Brennereinsatz (18) nach einem der vorhergehenden Ansprüche,
bei dem der Brenner (22) beabstandet zur Schwenkachse (28) angeordnet ist.

6. Brennereinsatz (18) nach Anspruch 5,
mit einer im Montagezustand unterhalb des Brenners (22) waagerecht verlaufenden Schwenkachse (28).

7. Brennereinsatz (18) nach einem der vorhergehenden Ansprüche,
der durch Verschwenken um die Schwenkachse (28) einem im Lichtbogenofen (2) stattfindenden Schmelzprozess nachführbar ist.

## Claims

1. Burner insert (18) for an arc furnace (2), comprising a support frame (20) which can be inserted into a wall opening (16) of a side wall (14) of the arc furnace (2) and a burner (22) arranged in the support frame (20), wherein the support frame (20) is pivotably mounted around a pivot axis (28) relative to the side wall (14) between a park position (P) and an operating position (A) in the installed state of the burner insert (18), **characterised in that** in the park position (P) the support frame (20) and burner (22) are located outside, and in the operating position (A) are located at least partially inside, an inner chamber (32) of the arc furnace (2).

2. Burner insert (18) according to claim 1,
wherein the support frame (20) can be pivoted additionally around a pivot axis (28) into a maintenance position (W), in which the burner (22) and the support frame (20) are located in an outer chamber (42) of the arc furnace (2) and are accessible from said chamber.

3. Burner insert (18) according to one of the preceding claims,
wherein the support frame (20) penetrates the wall opening (16) such that it almost completely fills said opening both in the operating position (A) and in the park position (P).

4. Burner insert (18) according to claim 3,
wherein the support frame (20) has an external surface (44) embodied essentially as a segment of a circle with reference to the pivot axis (28).

5. Burner insert (18) according to one of the preceding claims,
wherein the burner (22) is arranged spaced apart from the pivot axis (28).

6. Burner insert (18) according to claim 5,
having a pivot axis (28) extending horizontally underneath the burner (22) in the installed state.

7. Burner insert (18) according to one of the preceding claims,
which can be tracked with a melting process taking place in the arc furnace (2) by means of swivelling around the pivot axis (28).

## Revendications

1. Insert ( 18 ) de brûleur pour un four ( 2 ) à arc électrique, comprenant un cadre ( 20 ) porteur pouvant être inséré dans une ouverture ( 16 ) d'une paroi ( 14 ) latérale du four ( 2 ) à arc électrique et un brûleur ( 22 ) monté dans le cadre ( 20 ) porteur, dans lequel le cadre ( 20 ) porteur est, à l'état de montage de l'insert ( 18 ) du brûleur, monté pivotant autour d'un axe ( 28 ) de pivotement par rapport à la paroi ( 14 ) latérale entre une position ( P ) de repos et une position ( A ) de travail, **caractérisé en ce que** le cadre ( 20 ) porteur et le brûleur ( 22 ) se trouvent, dans la position ( P ) de repos, à l'extérieur et, dans la position ( A ) de travail, au moins en partie, à l'intérieur d'un espace ( 32 ) intérieur du four ( 2 ) à arc électrique.

2. Insert ( 18 ) de brûleur suivant la revendication 1,
dans lequel le cadre ( 20 ) porteur peut pivoter, en outre, autour d'un axe ( 28 ) de pivotement, pour venir dans une position ( W ) d'entretien, dans laquelle le brûleur ( 22 ) et le cadre ( 20 ) porteur se trouvent dans un espace ( 42 ) à l'extérieur du four ( 2 ) à arc électrique et sont accessibles hors de celui-ci.

3. Insert ( 18 ) de brûleur suivant l'une des revendications précédentes,
dans lequel le cadre ( 20 ) porteur passe dans l'ouverture ( 16 ) de la paroi, de manière à la remplir presque complètement, à la fois dans la position ( A ) de travail et dans la position ( P ) de repos.

4. Insert ( 18 ) de brûleur suivant la revendication 3,
dans lequel le cadre ( 20 ) porteur a, par rapport à l'axe ( 28 ) de pivotement, une surface ( 44 ) extérieure conformée sensiblement en forme de segment de cercle.

5. Insert ( 18 ) de brûleur suivant l'une des revendications précédentes,
dans lequel le brûleur ( 22 ) est disposé à distance de l'axe ( 28 ) de pivotement.

6. Insert ( 18 ) de brûleur suivant la revendication 5,
ayant un axe ( 28 ) de pivotement s'étendant, dans l'état de montage, horizontalement en dessous du brûleur ( 22 ).

7. Insert ( 18 ) de brûleur suivant l'une des revendications précédentes,
qui, après pivotement autour de l'axe ( 28 ) de pivotement, peut s'adapter à un processus de fusion ayant lieu dans le four ( 2 ) à arc électrique.
